(19) Europäisches Patentamt / European Patent Office / Office européen des brevets

(11) **EP 4 768 513 A1**

(12) **EUROPEAN PATENT APPLICATION**
published in accordance with Art. 153(4) EPC

(43) Date of publication:
01.07.2026 Bulletin 2026/27

(21) Application number: 24862924.8

(22) Date of filing: 06.09.2024

(51) International Patent Classification (IPC):
*C08F 293/00* (2006.01)

(52) Cooperative Patent Classification (CPC):
(C-Sets available)
C08F 293/00; C08F 214/22 (Cont.)

(86) International application number:
PCT/JP2024/032116

(87) International publication number:
WO 2025/053275 (13.03.2025 Gazette 2025/11)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 06.09.2023 JP 2023144745

(71) Applicant: DAIKIN INDUSTRIES, LTD.
Osaka-Shi, Osaka 530-0001 (JP)

(72) Inventors:
• **FURUTANI, Takahiro**
**Osaka-Shi, Osaka 5300001 (JP)**
• **TERADA, Junpei**
**Osaka-Shi, Osaka 5300001 (JP)**
• **ICHINOSE, Yuma**
**Osaka-Shi, Osaka 5300001 (JP)**

(74) Representative: **Hoffmann Eitle**
**Patent- und Rechtsanwälte PartmbB**
**Arabellastraße 30**
**81925 München (DE)**

(54) **POLYMER AND MOLDED ARTICLE**

(57) Provided is a polymer comprising a segment A and a segment B, wherein the segment A has a glass transition temperature of 25°C or less, and comprises a 2,3,3,3-tetrafluoropropene unit and a fluorine-containing monomer unit (excluding the 2,3,3,3-tetrafluoropropene unit and a trifluoroethylene unit), and the segment B has a melting point of 50°C or more.

**(Cont. next page)**

(52) Cooperative Patent Classification (CPC): (Cont.)

C-Sets
**C08F 214/22, C08F 214/182**

# EP 4 768 513 A1

**Description**

TECHNICAL FIELD

The present disclosure relates to a polymer and a formed article.

BACKGROUND ART

Patent Literature 1 discloses a method for producing a fluorine-containing multi-segment polymer, wherein when at least two monomers having a radical polymerizable unsaturated bond are radically polymerized in the presence of an iodide compound having a radical source and iodine bonded to carbon, each monomer to constitute each polymer chain segment is successively polymerized so that at least two polymer chain segments can be formed between the carbon-iodine bond of the iodide compound to thereby obtain a multi-segment polymer in which at least one of the polymer chain segments is a fluorine-containing polymer chain segment.

Patent Literature 2 discloses a fluorine-containing segmented polymer including a chain including two or three polymer chain segments, and a residue excluding at least one iodine atom from an iodine atom present on one end of the chain and an iodide compound present on another end of the chain, wherein

one of the polymer chain segments (in the case where the chain includes two polymer chain segments) or one or two of the polymer chain segments (in the case where the chain includes three polymer chain segments) are each an elastomeric polymer chain segment having a molecular weight of 30,000 to 1,200,000 selected from (1) a vinylidene fluoride/hexafluoropropylene/tetrafluoroethylene polymer (having a molar ratio of 45 to 90:5 to 50:0 to 35) and (2) a perfluoro(alkyl vinyl ether) (wherein the alkyl group has 1 to 3 carbon atoms)/tetrafluoroethylene/vinylidene fluoride polymer (having a molar ratio of 15 to 75:0 to 85 (excluding 0):0 to 85),
the remaining polymer segment is a non-elastomeric polymer chain segment having a molecular weight of 3,000 to 400,000 selected from (3) a vinylidene fluoride/tetrafluoroethylene polymer (having a molar ratio of 0 to 100:0 to 100) and (4) an ethylene/tetrafluoroethylene polymer (having a molar ratio of 40 to 60:40 to 60), and
a weight ratio of the elastomeric polymer chain segment to the non-elastomeric polymer chain segment is 40 to 95:5 to 60.

Patent Literature 3 discloses a method for producing a fluorine-containing block copolymer, including

a first step of copolymerizing a first monomer component containing tetrafluoroethylene and propylene as main components in the presence of a radical polymerization initiator and an iodine compound represented by a general formula $RI_2$ (wherein R is an alkylene group or fluoroalkylene group having 3 or more carbon atoms) at a polymerization temperature of 0 to 50°C to produce a tetrafluoroethylene/propylene segment, and
a second step of copolymerizing a second monomer component containing tetrafluoroethylene and ethylene as main components in the presence of the tetrafluoroethylene/propylene segment to bond the tetrafluoroethylene/ethylene segment to the tetrafluoroethylene/propylene segment.

Patent Literature 4 discloses a thermoplastic block copolymer having a trifluoroethylene unit and a further unit different from fluorinated vinylidene; or a trifluoroethylene unit and a fluorinated vinylidene unit only; or a trifluoroethylene unit, a fluorinated vinylidene unit, and a further unit, and having xanthate, trithiocarbonate, or a monoiodinated end group.

RELATED ART

PATENT DOCUMENTS

Patent Literature 1: Japanese Patent Laid-Open No. 53-3495
Patent Literature 2: Japanese Patent Publication No. 61-49327
Patent Literature 3: Japanese Patent Laid-Open No. 2014-070206
Patent Literature 4: Japanese Translation of PCT International Application Publication No. 2015-514854

SUMMARY OF THE INVENTION

PROBLEM TO BE SOLVED BY THE INVENTION

An object of the present disclosure is to provide a polymer that can be easily formed and has excellent alkaline resistance.

MEANS FOR SOLVING THE PROBLEM

According to the present disclosure, provided is a polymer containing a segment A and a segment B, wherein the segment A has a glass transition temperature of 25°C or less, and contains a 2,3,3,3-tetrafluoropropene unit and a fluorine-containing monomer unit (excluding the 2,3,3,3-tetrafluoropropene unit and a trifluoroethylene unit), and the segment B has a melting point of 50°C or more.

EFFECT OF INVENTION

According to the present disclosure, it is possible to provide a polymer that can be easily formed and has excellent alkaline resistance.

DESCRIPTION OF EMBODIMENTS

Hereinafter, specific embodiments of the present disclosure will be described in detail, but the present disclosure is not limited to the following embodiments.

(First polymer)

The first polymer of the present disclosure contains a segment A and a segment B. The first polymer may be a block polymer containing the segment A and the segment B.

For example, a polymer including an elastomeric polymer chain segment and a non-elastomeric polymer chain segment as the fluorine-containing segmented polymer disclosed in Patent Literature 2 is conventionally known as the block polymer. Patent Literature 2 discloses that the fluorine-containing segmented polymer including these segments has properties capable of sufficiently withstanding practical use as a thermoplastic rubber and can be directly compressed without being vulcanized or formed by other methods as in the case of a fluorine-containing thermoplastic resin, and the formed article thereof has desirable elastomer properties at almost the same level as that of vulcanized rubber.

However, a polymer exhibiting excellent flexibility, capable of being formed by a forming method applied to a common thermoplastic resin, and having excellent alkaline resistance is not known.

It has been found that, by constituting the polymer of two or more segments, making at least one segment have a glass transition temperature of 25°C or less and be further constituted of a 2,3,3,3-tetrafluoropropene unit and a fluorine-containing monomer unit (excluding the 2,3,3,3-tetrafluoropropene unit and a trifluoroethylene unit), and making at least one segment have a melting point of 50°C, the polymer to be obtained exhibits excellent flexibility, can be formed by a forming method applied to a common thermoplastic resin, and exhibits excellent alkaline resistance. The first polymer of the present disclosure has been completed based on this finding.

The first polymer contains the segment A and the segment B. Hereinafter, the first polymer will be described in detail. The first polymer may contain a further segment having a constitution different from the segment A and the segment B, as long as the polymer contains the segment A and the segment B.

(Segment A)

The segment A has a glass transition temperature of 25°C or less. The glass transition temperature of the segment A is preferably 0°C or less, more preferably -5°C or less, and further preferably -10°C or less, and the lower limit may be - 40°C or more without limitation. Because the first polymer contains the segment A having a glass transition temperature, it has excellent flexibility.

The glass transition temperature can be determined by cooling 10 mg of a sample to -75°C using a differential scanning calorimeter (DSC822e manufactured by Mettler Toledo, or X-DSC7000 manufactured by Hitachi High-Tech Science Corporation) and then raising the temperature at 20°C/min to obtain a DSC curve and defining the temperature indicating an intersection point of the extensions of the base lines before and after the secondary transition of the DSC curve and the tangent line at an inflection point of the DSC curve as the glass transition temperature.

The heat of fusion of the segment A is preferably less than 5 J/g, more preferably less than 3 J/g, and further preferably less than 2 J/g, from the viewpoint of being able to further improve the softness.

The heat of fusion can be calculated from the magnitude of the melting peak ($\Delta H$) of an endothermic curve obtained by raising the temperature of a sample at a rate of 10°C/min from 30°C to 220°C using a differential scanning calorimeter (DSC). When the polymer does not exhibit a clear melting peak, the polymer has no heat of fusion, that is, the heat of fusion of the polymer is 0 J/g.

The segment A may be a segment that does not exhibit a clear melting point.

The segment A contains a 2,3,3,3-tetrafluoropropene unit and a fluorine-containing monomer unit (excluding the 2,3,3,3-tetrafluoropropene unit and a trifluoroethylene unit). Because the first polymer has a glass transition temperature and contains the segment A containing a 2,3,3,3-tetrafluoropropene unit and a fluorine-containing monomer unit, it has not only excellent flexibility, but also excellent alkaline resistance. In addition, because the segment A contains a 2,3,3,3-tetrafluoropropene unit, the solvent solubility of the polymer in a solvent such as N-methyl-2-pyrrolidone or N,N-dimethylformamide can be improved.

The fluorine-containing monomer capable of constituting the segment A is not limited, as long as it is a monomer other than 2,3,3,3-tetrafluoropropene and trifluoroethylene and the monomer contains a fluorine atom, and examples thereof include vinylidene fluoride [VdF], tetrafluoroethylene [TFE], hexafluoropropylene, perfluoro(methyl vinyl ether), perfluoro(ethyl vinyl ether), perfluoro(propyl vinyl ether), chlorotrifluoroethylene, hexafluoroisobutene, and vinyl fluoride.

The fluorine-containing monomer capable of constituting the segment A is preferably at least one selected from the group consisting of VdF, TFE, hexafluoropropylene, perfluoro(methyl vinyl ether), perfluoro(ethyl vinyl ether), perfluoro(propyl vinyl ether), and chlorotrifluoroethylene, and more preferably at least one selected from the group consisting of VdF and TFE, and further preferably VdF. When the segment A contains a VdF unit, the glass transition temperature of the segment A can be easily adjusted to the desired range and flexibility can be further improved. In addition, when the segment A contains a VdF unit, the solvent solubility of the polymer in a solvent such as N-methyl-2-pyrrolidone or N,N-dimethylformamide can be improved.

The content of the 2,3,3,3-tetrafluoropropene unit in the segment A is preferably 1 to 85 mol%, more preferably 6 mol% or more, further preferably 12 mol% or more, further more preferably 18 mol% or more, particularly preferably 20 mol% or more, and more preferably 78 mol% or less, further preferably 50 mol% or less, further more preferably 40 mol% or less, particularly preferably 30 mol% or less, based on all monomer units constituting the segment A.

The content of the fluorine-containing monomer unit in the segment A is preferably 99 to 15 mol%, more preferably 94 mol% or less, further preferably 88 mol% or less, further more preferably 82 mol% or less, particularly preferably 78 mol% or less, and more preferably 22 mol% or more, further preferably 50 mol% or more, further more preferably 60 mol% or more, particularly preferably 70 mol% or more, based on all monomer units constituting the segment A.

The content of the VdF unit in the segment A is preferably 99 to 15 mol%, more preferably 94 mol% or less, further preferably 88 mol% or less, further more preferably 82 mol% or less, particularly preferably 78 mol% or less, and more preferably 22 mol% or more, further preferably 50 mol% or more, further more preferably 60 mol% or more, particularly preferably 70 mol% or more, based on all monomer units constituting the segment A.

The segment A may further contain a non-fluorine-containing monomer unit. Examples of the non-fluorine-containing monomer include ethylene, propylene, and alkylvinyl ether. The content of the non-fluorine-containing monomer unit is preferably 0 to 50 mol%, more preferably 0 to 10 mol%, further preferably 0 to 1 mol%, and may be 0 mol%, based on all monomer units constituting the segment A.

The segment A may further contain a unit based on a monomer having a reactive group such as a cyano group, a carboxyl group, an alkoxycarbonyl group, I, Br, -CH$_2$OH, or a carbon-carbon double bond. The content of the unit based on the monomer having a reactive group is preferably 0 to 50 mol%, more preferably 0 to 10 mol%, further preferably 0 to 1 mol%, and may be 0 mol%, based on all monomer units constituting the segment A.

In the present disclosure, the content of each monomer unit can be measured by an NMR method.

In one embodiment, the segment A can be formed of a 2,3,3,3-tetrafluoropropene/VdF copolymer or a 2,3,3,3-tetrafluoropropene/VdF/TFE copolymer.

In the 2,3,3,3-tetrafluoropropene/VdF copolymer, the formulation of the 2,3,3,3-tetrafluoropropene unit/the VdF unit (mol%) is preferably (18 to 40)/(82 to 60), and more preferably (20 to 30)/(80 to 70).

In the 2,3,3,3-tetrafluoropropene/VdF/TFE copolymer, the formulation of the 2,3,3,3-tetrafluoropropene unit/the VdF unit/TFE unit (mol%) is preferably (18 to 40)/(81 to 25)/(1 to 35), and more preferably (20 to 40)/(75 to 30)/(5 to 30).

In one embodiment, the segment A contains a 2,3,3,3-tetrafluoropropene unit and a fluorine-containing monomer unit (excluding the 2,3,3,3-tetrafluoropropene unit and a trifluoroethylene unit), and the content of the monomer unit other than the 2,3,3,3-tetrafluoropropene unit and the fluorine-containing monomer unit is preferably 0 to 10 mol%, more preferably 0 to 2 mol%, further preferably 0 to 1 mol%, further more preferably 0 to 0.1 mol%, particularly preferably 0 mol%, based on all monomer units constituting the segment A. The content of the 2,3,3,3-tetrafluoropropene unit and the content of the fluorine-containing monomer unit may be within the above range.

In one embodiment, the segment A contains a 2,3,3,3-tetrafluoropropene unit and a VdF unit, and the content of the monomer unit other than the 2,3,3,3-tetrafluoropropene unit and the VdF unit is preferably 0 to 10 mol%, more preferably 0 to 2 mol%, further preferably 0 to 1 mol%, further more preferably 0 to 0.1 mol%, and particularly preferably 0 mol%, based on all monomer units constituting the segment A. The content of the 2,3,3,3-tetrafluoropropene unit and the content of the VdF unit may be within the above range.

(Segment B)

The segment B has a melting point of 50°C or more. The melting point of the segment B is preferably 90°C or more, more preferably 140°C or more, and preferably 240°C or less, more preferably 220°C or less, further preferably 200°C or less. Because the first polymer contains the segment B having a melting point in addition to the segment A having a glass transition temperature, it has excellent flexibility, and can further be formed by a forming method applied to a common thermoplastic resin. In the present disclosure, the term "capable of easily forming a polymer" means that the polymer can be formed by a forming method applied to a common thermoplastic resin, such as extrusion forming, injection molding, and compression molding.

The melting point can be determined as the temperature at the peak of an endothermic curve obtained by raising the temperature of a sample at a rate of 10°C/min from 30°C to 220°C using a differential scanning calorimeter (DSC).

The melting point of the segment B is usually the same as the melting point of the first polymer. Therefore, by measuring the melting point of the first polymer, the melting point of the segment B in the first polymer can be grasped.

The heat of fusion of the segment B is preferably 5 J/g or more, more preferably 10 J/g or more, further preferably 30 J/g or more, further more preferably 35 J/g or more, and preferably 90 J/g or less, more preferably 60 g/g or less, further preferably 55 J/g or less

The heat of fusion can be calculated from the magnitude of the melting peak ($\Delta H$) of an endothermic curve obtained by raising the temperature of a sample at a rate of 10°C /min from 30°C to 220°C using a differential scanning calorimeter (DSC).

The segment B may contain a fluorine-containing monomer unit, or may contain a non-fluorine-containing monomer unit, as long as the segment B is formed of a polymer having a melting point. The segment B preferably contains a fluorine-containing monomer unit, and more preferably contains a fluorine-containing monomer unit (excluding the trifluoroethylene unit), from the viewpoint of further improving the alkaline resistance of the first polymer.

The fluorine-containing monomer is not limited, and examples thereof include vinylidene fluoride [VdF], tetrafluoroethylene [TFE], hexafluoropropylene, perfluoro(methylvinyl ether), perfluoro(ethylvinyl ether), perfluoro(propylvinyl ether), chlorotrifluoroethylene, hexafluoroisobutene, and vinyl fluoride.

The fluorine-containing monomer is preferably at least one selected from the group consisting of VdF, TFE, hexafluoropropylene, perfluoro(methyl vinyl ether), perfluoro(ethyl vinyl ether), perfluoro(propyl vinyl ether), and chlorotrifluoroethylene, and more preferably at least one selected from the group consisting of VdF and TFE, and further preferably VdF.

When the segment B has a VdF unit as the fluorine-containing monomer unit, the first polymer exhibits excellent flexibility, can be formed by a forming method applied to a common thermoplastic resin, exhibits excellent alkaline resistance, and further exhibits excellent solvent solubility in a solvent such as N-methyl-2-pyrrolidone or N,N-dimethylformamide.

The segment B may contain a further monomer unit other than VdF, in addition to the VdF unit. The further monomer may be any of a fluorine-containing monomer and a non-fluorine-containing monomer, and is preferably a fluorine-containing monomer (excluding trifluoroethylene) or a non-fluorine-containing monomer.

Examples of the fluorine-containing monomer capable of constituting the segment B together with VdF include TFE, hexafluoropropylene, perfluoro(methyl vinyl ether), perfluoro(ethyl vinyl ether), perfluoro(propyl vinyl ether), chlorotrifluoroethylene, hexafluoroisobutene, vinyl fluoride, and 2,3,3,3-tetrafluoropropene.

Examples of non-fluorine-containing monomer capable of constituting the segment B together with VdF include ethylene and propylene.

The segment B may further contain a unit based on a monomer having a polar group such as a carbonyl group-containing group, an epoxy group, a hydroxy group, a sulfonic acid group, a sulfuric acid group, a phosphoric acid group, an amino group, an amide group, or an alkoxy group.

Examples of the monomer having a polar group include a hydroxyalkyl (meth)acrylate such as hydroxyethyl acrylate or 2-hydroxypropyl acrylate; an unsaturated monobasic acid such as (meth)acrylic acid, crotonic acid, vinylacetic acid (3-butenoic acid), 3-pentenoic acid, 4-pentenoic acid, 3-hexenoic acid, or 4-heptenoic acid; an unsaturated dibasic acid such as maleic acid, maleic anhydride, citraconic acid, or citraconic anhydride; an alkylidenemalonate ester such as dimethyl methylidenemalonate; a vinyl carboxyalkyl ether such as vinyl carboxymethyl ether or vinyl carboxyethyl ether; a carboxyalkyl (meth)acrylate such as 2-carboxyethyl acrylate or 2-carboxyethyl methacrylate; a (meth)acryloyloxyalkyl dicarboxylate ester such as acryloyloxyethyl succinate, methacryloyloxyethyl succinate, acryloyloxyethyl phthalate, acryloyloxypropyl succinate, or methacryloyloxyethyl phthalate; and a monoester of an unsaturated dibasic acid such as monomethyl maleate, monoethyl maleate, monomethyl citraconate, or monoethyl citraconate.

Among these, the further monomer capable of constituting the segment B together with VdF is preferably at least one selected from the group consisting of TFE, hexafluoropropylene, 2,3,3,3-tetrafluoropropene, and (meth)acrylic acid.

The content of the VdF unit in the segment B is preferably 60 mol% or more, more preferably 90 mol% or more, further preferably 95 mol% or more, and further preferably 99 mol% or more, and may be 100 mol% or less, based on all monomer units constituting the segment B, from the viewpoint of being able to further improve the solvent solubility in a solvent such as N-methyl-2-pyrrolidone or N,N-dimethylformamide.

The content of the further monomer unit in the segment B is preferably 40 mol% or less, more preferably 10 mol% or less, further preferably 5 mol% or less, further preferably 1 mol% or less, and may be 0 mol% or more, based on all monomer units constituting the segment B, from the viewpoint of being able to further improve the solvent solubility in a solvent such as N-methyl-2-pyrrolidone or N,N-dimethylformamide.

In one embodiment, the segment B can be formed of a VdF homopolymer containing only a VdF unit, or a copolymer containing a VdF unit and at least one further monomer unit selected from the group consisting of TFE unit, hexafluoropropylene unit, a 2,3,3,3-tetrafluoropropene unit, and a (meth)acrylic acid unit.

In the copolymer containing a VdF unit and a further monomer unit, the formulation of the VdF unit/the further monomer unit (mol%) is preferably 97.0 to 99.9/3.0 to 0.1.

The first polymer may contain a further segment C having a constitution different from the segment A and the segment B, as long as the polymer contains the segment A and the segment B.

Examples of the first polymer include block polymers containing a chain structure represented by any of the following general formulas.

General formula:         A-B

General formula:         A-B-A

General formula:         B-A-B

General formula:         A-B-C

General formula:         B-A-C

In the formula, A represents the segment A, B represents the segment B, and C represents the segment C.

The first polymer preferably contains a chain structure represented by the general formula (1) or the general formula (2), from the viewpoint of being able to further improve the alkaline resistance, and easy production.

General formula (1):         A-B-A

General formula (2):         B-A-B

In the formula, A represents the segment A, and B represents the segment B.

In the polymer, the mass ratio of the segment A to the segment B, (A/B) is preferably 40/60 to 95/5, more preferably 50/50 or more, further preferably 60/40 or more, and more preferably 90/10 or less, from the viewpoint of the balance between excellent softness and excellent alkaline resistance.

The number-average molecular weight (in terms of polystyrene) of the first polymer is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The above number-average molecular weight can be measured by gel permeation chromatography (GPC) using dimethylformamide as a solvent.

The weight average molecular weight (in terms of polystyrene) of the first polymer is preferably 50,000 to 3,000,000, more preferably 80,000 or more, further preferably 100,000 or more, further more preferably 200,000 or more, particularly preferably 500,000 or more, and more preferably 2,400,000 or less, further preferably 2,200,000 or less, particularly preferably 2,000,000 or less. The above weight average molecular weight can be measured by gel permeation chromatography (GPC) using dimethylformamide as a solvent.

The first polymer of the present disclosure can be produced by a production method such as:

(1) a method in which monomers capable of constituting the segment B are polymerized in the presence of a bromine compound or an iodine compound as a chain transfer agent to prepare a polymer forming the segment B, and then monomers capable of constituting the segment A are polymerized in the presence of the polymer forming the segment B to prepare a polymer forming the segment A, or

(2) a method in which monomers capable of constituting the segment A are polymerized in the presence of a bromine compound or an iodine compound as a chain transfer agent to prepare a polymer forming the segment A, and then monomers capable of constituting the segment B are polymerized in the presence of the polymer forming the segment A to prepare a polymer forming the segment B.

When the method (1) is used, a polymer in which a segment A is bonded to both ends of a polymer chain forming the segment B, that is, a polymer containing a chain structure represented by the general formula (1): A-B-A can be obtained.

When the method (2) is used, a polymer in which a segment B is bonded to both ends of a polymer chain forming the segment A, that is, a polymer containing a chain structure represented by the general formula (2): B-A-B can be obtained.

In the method (1) and the method (2), a bromine compound or an iodine compound is used as a chain transfer agent. By using a bromine compound or an iodine compound, an iodine atom or a bromine atom is introduced into the end of the polymer chain forming one segment and functions as the binding site with another segment.

Examples of the polymerization method using a bromine compound or an iodine compound include a method in which emulsion polymerization is carried out in a water medium in a substantially oxygen-free state and in the presence of a bromine compound or an iodine compound while applying pressure (iodine transfer polymerization method). Representative examples of the bromine compound or iodine compound to be used include a compound represented by:

general formula: $R^8I_xBr_y$

wherein each of x and y is an integer of 0 to 2 and satisfies $1 \leq x + y \leq 2$, $R^8$ is a saturated or unsaturated fluorohydrocarbon group or chlorofluorohydrocarbon group having 1 to 16 carbon atoms, or a hydrocarbon group having 1 to 3 carbon atoms, and optionally contains an oxygen atom.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, $CFBrClCFClBr$, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, a monoiodomonobromo substituent of benzene, a diiodomonobromo substituent, as well as (2-iodoethyl) and (2-bromoethyl) substituents, and these compounds may be used alone, or may be used in combination with each other.

Among these, 1,4-diiodoperfluorobutane, 1,6-diiodoperfluorohexane, or 2-iodoperfluoropropane is preferably used in view of polymerization reactivity, crosslinking reactivity, easy availability, and the like.

In the above production method, polymerization of the monomer is suitably carried out using an emulsion polymerization method. In one embodiment, polymerization of the monomer is carried out in the presence of a polymerization initiator, a surfactant, and a solvent.

Examples of the polymerization initiator include an oil-soluble radical polymerization initiator or a water-soluble radical initiator.

The oil-soluble radical polymerization initiator may be a known oil-soluble peroxide, and representative examples thereof include a dialkyl peroxycarbonate such as diisopropyl peroxydicarbonate and di sec-butyl peroxydicarbonate; a peroxyester such as t-butylperoxyisobutyrate or t-butylperoxypivalate; a dialkyl peroxide such as di-t-butyl peroxide; and a di[perfluoro(or fluorochloro)acyl] peroxide such as di(ω-hydro-dodecafluoroheptanoyl) peroxide, di(ω-hydro-tetradecafluorooctanoyl) peroxide, di(ω-hydro-hexadecafluorononanoyl) peroxide, di(perfluorobutyryl) peroxide, di(perflupareryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, or di(undecachlorodotriacontafluorodocosanoyl) peroxide.

The water-soluble radical polymerization initiator may be a known water-soluble peroxide, and examples thereof include an ammonium salt, a potassium salt, a sodium salt, t-butyl permaleate, and t-butylhydro peroxide of persulfuric acid, perboric acid, perchloric acid, perphosphoric acid, and percarbonic acid. A reducing agent such as a sulfite may be contained in combination, and the amount thereof used may be 0.1 to 20 times with respect to the peroxide.

The amount of the polymerization initiator added is not limited, and the radical polymerization initiator is only required to be added in one portion in an early stage of polymerization, or successively, or continuously, in an amount such that the polymerization rate is not significantly reduced (e.g., several ppm relative to water concentration) or more. The upper limit is in the range such that the polymerization reaction heat can be removed from an apparatus surface.

The surfactant may be a nonionic surfactant, an anionic surfactant, a cationic surfactant, or the like. The amount added (relative to a solvent) is preferably 10 ppm by mass to 20% by mass, more preferably 10 ppm by mass to 10% by mass, further preferably 10 to 5,000 ppm by mass, and particularly preferably 50 to 5,000 ppm by mass.

In addition, a polymerizable emulsifier may be used as the surfactant. The polymerizable emulsifier is not limited, as long as it is a compound having one or more unsaturated bonds and one or more hydrophilic groups, and examples thereof include $CH_2=CFCF_2OCF(CF_3)CF_2OCF(CF_3)COONH_4$, $CH_2=CFCF_2CF(CF_3)OCF_2CF_2COONH_4$, and $CF_2=CFOCF_2CF(CF_3)OCF(CF_3)COONH_4$. The amount added (relative to a solvent) is preferably 10 to 5,000 ppm by mass, and more preferably 50 to 5,000 ppm by mass.

The solvent is preferably a solvent having no chain transfer properties. Examples of the solvent include water, a mixture of water and a water-soluble organic solvent, or a mixture of water and a water-insoluble organic solvent.

In the polymerization of the monomer, the polymerization temperature, the polymerization pressure, and the polymerization time vary depending on the kind of the solvent and the polymerization initiator, and may be -15 to 150°C, an atmospheric pressure to 12 MPa, and 1 to 24 hours. When an oil-soluble radical polymerization initiator is used as the polymerization initiator, the polymerization temperature is preferably 30 to 95°C. When a water-soluble radical polymerization initiator is used as the polymerization initiator, the polymerization temperature is preferably 0 to 100°C, and more preferably 10 to 95°C.

When the polymerization of the monomer is carried out by the emulsion polymerization method, an aqueous dispersion containing the polymer is obtained. In the above production method, the polymer in the aqueous dispersion can be coagulated, washed with water, dehydrated, and dried to obtain polymer powder. Coagulation can be carried out by adding an inorganic salt such as aluminum sulfate or an inorganic acid to the dispersion, applying a mechanical shear force to the dispersion, or freezing the dispersion.

The first polymer can also be produced using at least 2,3,3,3-tetrafluoropropene as the monomer in accordance with the methods described in Japanese Patent Laid-Open No. 53-3495 and Japanese Patent Publication No. 61-49327.

(Second polymer)

The second polymer of the present disclosure is a polymer having a glass transition temperature and a melting point, containing a 2,3,3,3-tetrafluoropropene unit, and having an extraction in tetrahydrofuran at 25°C of 5% by mass or less. The polymer containing a trifluoroethylene unit is not included in the second polymer.

As described above, a polymer exhibiting excellent flexibility, capable of being formed by a forming method applied to a common thermoplastic resin, and having excellent alkaline resistance is not known.

It has been found that, by selecting the constitution of the polymer so that the polymer has a glass transition temperature and a melting point, introducing the 2,3,3,3-tetrafluoropropene unit into the polymer, and selecting the constitution of the polymer so that the polymer has an extraction in tetrahydrofuran at 25°C of 5% by mass or less, the polymer to be obtained exhibits excellent flexibility, can be formed by a forming method applied to a common thermoplastic resin, and exhibits excellent alkaline resistance. The second polymer of the present disclosure has been completed based on this finding.

The glass transition temperature of the second polymer is preferably 25°C or less, more preferably 0°C or less, further preferably -5°C or less, further more preferably -10°C or less, and the lower limit may be, but is not limited to, - 40°C or more. Because the second polymer has a glass transition temperature, the second polymer has excellent softness.

The glass transition temperature can be determined by cooling 10 mg of a sample to -75°C using a differential scanning calorimeter (DSC822e manufactured by Mettler Toledo, or X-DSC7000 manufactured by Hitachi High-Tech Science Corporation) and then raising the temperature at 20°C/min to obtain a DSC curve and defining the temperature indicating an intersection point of the extensions of the base lines before and after the secondary transition of the DSC curve and the tangent line at an inflection point of the DSC curve as the glass transition temperature.

The melting point of the polymer is preferably 50°C or more, more preferably 90°C or more, further preferably 140°C or more, and preferably 240°C or less, more preferably 220°C or less, further preferably 200°C or less. Because the second polymer has a melting point in addition to a glass transition temperature, it has excellent flexibility, and can further be formed by a forming method applied to a common thermoplastic resin.

The melting point can be determined as the temperature at the peak of an endothermic curve obtained by raising the temperature of a sample at a rate of 10°C/min from 30°C to 220°C using a differential scanning calorimeter (DSC).

The extraction in tetrahydrofuran of the second polymer is 5% by mass or less, preferably 4% by mass or less, and more preferably 3% by mass or less. By setting the extraction in tetrahydrofuran to within the above numerical value range, flexibility can be imparted to the polymer, and further, excellent formability can be imparted to the polymer. The lower limit of the extraction in tetrahydrofuran is not limited, and may be 1% by mass or more or 2% by mass or more.

The extraction in tetrahydrofuran can be measured by a method involving immersing the polymer in tetrahydrofuran at 25°C and drying the filtered solution portion.

The second polymer contains a 2,3,3,3-tetrafluoropropene unit. Because the second polymer has a glass transition temperature and a melting point and contains a 2,3,3,3-tetrafluoropropene unit, it has not only excellent flexibility, but also excellent alkaline resistance.

The second polymer preferably contains a fluorine-containing monomer unit (excluding the 2,3,3,3-tetrafluoropropene unit and trifluoroethylene unit). When a fluorine-containing monomer unit is introduced into the polymer, the glass transition temperature and melting point of the polymer can be easily adjusted, and flexibility and alkaline resistance can be further improved.

The fluorine-containing monomer capable of constituting the second polymer is not limited, as long as it is a monomer other than 2,3,3,3-tetrafluoropropene and trifluoroethylene and the monomer contains a fluorine atom, and examples thereof include vinylidene fluoride [VdF], tetrafluoroethylene [TFE], hexafluoropropylene, perfluoro(methylvinyl ether), perfluoro(ethylvinyl ether), perfluoro(propylvinyl ether), chlorotrifluoroethylene, hexafluoroisobutene, and vinyl fluoride.

The fluorine-containing monomer capable of constituting the second polymer is preferably at least one selected from the group consisting of VdF, TFE, hexafluoropropylene, perfluoro(methylvinyl ether), perfluoro(ethylvinyl ether), perfluoro(propylvinyl ether), and chlorotrifluoroethylene, more preferably at least one selected from the group consisting of VdF and TFE, and is further preferably VdF.

The content of the 2,3,3,3-tetrafluoropropene unit in the second polymer is preferably 1 to 65 mol%, more preferably 5 mol% or more, further preferably 9 mol% or more, further more preferably 12 mol% or more, particularly preferably 14 mol% or more, and more preferably 62 mol% or less, further preferably 40 mol% or less, further more preferably 32 mol% or less, particularly preferably 24 mol% or less, based on all monomer units constituting the second polymer.

The content of the fluorine-containing monomer unit in the second polymer is preferably 99 to 35 mol%, more preferably 95 mol% or less, further preferably 91 mol% or less, further more preferably 88 mol% or less, particularly preferably 86 mol% or less, and more preferably 38 mol% or more, further preferably 60 mol% or more, further more preferably 68 mol% or more, particularly preferably 76 mol% or more, based on all monomer units constituting the second polymer.

When the second polymer contains a VdF unit as the fluorine-containing monomer unit, the second polymer exhibits excellent flexibility, can be formed by a forming method applied to a common thermoplastic resin, exhibits further excellent alkaline resistance, and further exhibits further excellent solvent solubility in a solvent such as N-methyl-2-pyrrolidone or N,N-dimethylformamide.

Because the solvent solubility is further improved, the content of the VdF unit in the second polymer is preferably 99 to 35 mol%, more preferably 95 mol% or less, further preferably 91 mol% or less, further more preferably 88 mol% or less, particularly preferably 86 mol% or less, and more preferably 38 mol% or more, further preferably 60 mol% or more, further more preferably 68 mol% or more, particularly preferably 76 mol% or more, based on all monomer units constituting the second polymer.

The second polymer may further contain a non-fluorine-containing monomer unit. Examples of the non-fluorine-containing monomer include ethylene, propylene, and alkylvinyl ether. The content of the non-fluorine-containing monomer unit is preferably 0 to 40 mol%, more preferably 0 to 8 mol%, further preferably 0 to 1 mol%, and may be 0 mol%, based on all monomer units constituting the second polymer.

The second polymer may further contain a unit based on a monomer having a reactive group such as a cyano group, a carboxyl group, an alkoxycarbonyl group, I, Br, -CH$_2$OH, or a carbon-carbon double bond. The content of the unit based on the monomer having a reactive group is preferably 0 to 10 mol%, more preferably 0 to 2 mol%, further preferably 0 to 1 mol%, and may be 0 mol%, based on all monomer units constituting the second polymer.

The second polymer may further contain a unit based on a monomer having a polar group such as a carbonyl group-containing group, an epoxy group, a hydroxy group, a sulfonic acid group, a sulfuric acid group, a phosphoric acid group, an amino group, an amide group, or an alkoxy group.

Examples of the monomer having a polar group include a hydroxyalkyl (meth)acrylate such as hydroxyethyl acrylate or 2-hydroxypropyl acrylate; an unsaturated monobasic acid such as (meth)acrylic acid, crotonic acid, vinyl acetic acid (3-butenoic acid), 3-pentenoic acid, 4-pentenoic acid, 3-hexenoic acid, or 4-heptenoic acid; an unsaturated dibasic acid such as maleic acid, maleic anhydride, citraconic acid, or citraconic anhydride; an alkylidenemalonate ester such as dimethyl methylidenemalonate; a vinyl carboxy alkyl ether such as vinyl carboxymethyl ether or vinyl carboxyethyl ether; a carboxy alkyl (meth)acrylate such as 2-carboxyethyl acrylate or 2-carboxyethyl methacrylate; a (meth)acryloyloxyalkyl dicarboxylate ester such as acryloyloxyethyl succinate, methacryloyloxyethyl succinate, acryloyloxyethyl phthalate, acryloyloxypropyl succinate, or methacryloyloxyethyl phthalate; and a monoester of an unsaturated dibasic acid such as monomethyl maleate, monoethyl maleate, monomethyl citraconate, or monoethyl citraconate.

The content of the unit based on the monomer having a polar group is preferably 0 to 10 mol%, more preferably 0 to 2 mol%, further preferably 0 to 1 mol%, and may be 0 mol%, based on all monomer units constituting the second polymer.

In one embodiment, the second polymer contains a 2,3,3,3-tetrafluoropropene unit and a fluorine-containing monomer unit (excluding the 2,3,3,3-tetrafluoropropene unit and trifluoroethylene unit), and the content of the monomer unit other than the 2,3,3,3-tetrafluoropropene unit and the fluorine-containing monomer unit is preferably 0 to 10 mol%, more preferably 0 to 2 mol%, further preferably 0 to 1 mol%, further more preferably 0 to 0.1 mol%, and particularly preferably 0 mol%, based on all monomer units constituting the second polymer. The content of the 2,3,3,3-tetrafluoropropene unit and the content of the fluorine-containing monomer unit may be within the above range.

In one embodiment, the second polymer contains a 2,3,3,3-tetrafluoropropene unit and a VdF unit, and the content of the monomer unit other than the 2,3,3,3-tetrafluoropropene unit and the VdF unit is preferably 0 to 10 mol%, more preferably 0 to 2 mol%, further preferably 0 to 1 mol%, further more preferably 0 to 0.1 mol%, and particularly preferably 0 mol%, based on all monomer units constituting the second polymer. The content of the 2,3,3,3-tetrafluoropropene unit and the content of the VdF unit may be within the above range.

The number average molecular weight, in terms of polystyrene, of the second polymer is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The number average molecular weight can be measured by gel permeation chromatography (GPC) using dimethylformamide as a solvent.

The weight average molecular weight (in terms of polystyrene) of the second polymer is preferably 50,000 to 3,000,000, more preferably 80,000 or more, further preferably 100,000 or more, further more preferably 200,000 or more, particularly preferably 500,000 or more, and more preferably 2,400,000 or less, further preferably 2,200,000 or less, particularly preferably 2,000,000 or less. The above weight average molecular weight can be measured by gel permeation chromatography (GPC) using dimethylformamide as a solvent.

The heat of fusion of the second polymer is preferably 1 J/g or more, more preferably 3 J/g or more, further preferably 5 J/g or more, further more preferably 8 J/g or more, and preferably 40 J/g or less, more preferably 30 g/g or less, further preferably 20 J/g or less.

In one embodiment, the second polymer contains two or more segments. By constituting the polymer using two or more segments, a glass transition temperature and a melting point can be easily imparted to the polymer, the glass transition temperature and melting point of the polymer can be easily adjusted, and flexibility and alkaline resistance can be further improved.

When the second polymer contains two or more segments, the constitution of each segment may be the same as the constitution of each segment of the first polymer. That is, the second polymer can contain the segment A and the segment B as the first polymer, and may have the same constitution as the first polymer. The first polymer may also have the same constitution as the second polymer.

The second polymer of the present disclosure can be, for example, produced by the method described above as the method for producing the first polymer of the present disclosure.

A composition may be prepared by mixing the first polymer of the present disclosure or the second polymer of the present disclosure (hereinafter, the first polymer and the second polymer are sometimes simply referred to as "the polymer of the present disclosure") with a further component. Examples of the further component include a filler, a plasticizer, a processing aid, a mold release agent, a pigment, a flame retarder, a lubricant, a light stabilizer, a weathering stabilizer, a conductive agent, an antistatic agent, an ultraviolet absorber, an antioxidant, a foaming agent, a fragrance, an oil, a softener, and a dehydrofluorinating agent.

A further polymer different from the polymer of the present disclosure can also be used as the further component. Examples of the further polymer include a fluororesin, a fluoroelastomer, and a non-fluorine-containing polymer.

It is also possible to form the polymer of the present disclosure or the above composition to obtain a formed article.

The polymer of the present disclosure or the above composition can be formed by a forming method applied to a common thermoplastic resin. Examples of the forming method include injection molding, extrusion forming, compression molding, blow molding, transfer molding, rotomolding, and rotolining molding.

In one embodiment, the polymer of the present disclosure exhibits good solvent solubility. The polymer of the present disclosure is well dissolved in solvents, for example, nitrogen-containing organic solvents such as N-methyl-2-pyrrolidone, N,N-dimethylacetamide, and dimethylformamide; ketone-based solvents such as acetone, methyl ethyl ketone, cyclohexanone, and methyl isobutyl ketone; ester-based solvents such as ethyl acetate and butyl acetate; and ether-based solvents such as dioxane.

When the polymer of the present disclosure exhibits good solvent solubility, the polymer of the present disclosure can be dissolved in a solvent and used as a coating material.

The polymer of the present disclosure or the above composition can also be used as a binder for forming an electrode of a battery.

Because the formed article containing the polymer of the present disclosure has flexibility and alkaline resistance, it can be used for various applications.

The formed article can be, for example, used as a tube, a hose, a film, a coating material for electric wire, a roll, a flexible joint, a rubber plate, a belt, a damper, a valve, a valve sheet, a valve body, a chemical-resistant coating material, a laminating material, and a lining material.

The formed article can also be used as various sealing materials such as a ring, a packing, a gasket, a diaphragm, an oil seal, a bearing seal, a lip seal, a plunger seal, a door seal, a face seal, a gas delivery plate seal, a wafer support seal, and a barrel seal.

In particular, because the formed article containing the polymer of the present disclosure has excellent flexibility and alkaline resistance, it can be suitably used as various members used in chemical solution supply equipment for semiconductor production and a food apparatus, such as a piping, a tube, a joint, a valve, a tank, a container, a chemical solution bag, a pump, and a filter.

The formed article containing the polymer of the present disclosure is also suitably used as a formed article in contact with a human body.

The formed article in contact with a human body is not necessarily always in contact with a human body, as a watch belt, and may be one in contact with a human body only during use, as a smartphone case. The entire surface of the formed article is not necessarily in contact with a human body, and a part thereof may be in contact with a human body. Examples of specific applications of the formed article include the followings.

(1) Interior articles of automobiles, bikes, ocean vessels, aircrafts, bicycles, etc.
handles, armrests, shift levers, seat covers, etc.
(2) Wearables
smart watches, smart bands, smart glasses, VR (Virtual Reality) equipment, on-body wearables, others (on-cloth wearables, ring wearables), etc.
(3) Spectacle parts
nose pads, bows, etc.
(4) Health goods
magnetic necklaces, magnetic bracelets, magnetic adhesive tapes such as PIP ELEKIBAN(R), pelvis belts, supporters, healing dolls, etc.
(5) Sports goods
mats, shoes, underwater masks, snorkels, diving goods, fishing goods, golf club grips, etc.
(6) Earphone parts, headphone parts
cables, ear hooks, ear pieces, ear pads, etc.
(7) Electronic device covers
smartphone covers, tablet covers, keyboards (covers), etc.
(8) Kitchen goods
spatulas, turners, bowels, steamers, confectionery-baking molds, cups for lunch boxes, rubber aprons for babies and care, feeding bottles, pacifiers (containers, suction mouthpieces), water bottles, mugs, handles of pots and kettles, etc.
(9) Pet goods
toilet trays, feed trays, collars, etc.
(10) Office equipment
pen grips, mouses, mousepads, etc.
(11) Ornaments
boots, high boots, insoles, caps, hair bands, rain coats, grips of umbrellas and canes, etc.
(12) Others
buttons, wheel socks for wheelchairs, bags, eyelash curlers, hearing aids, rubber accessories, rubber accessories with no magnetism for fashion applications, robot exteriors, robot (flexible) cables, rocker keys for public baths, etc.

The embodiments have been described above, and it will be understood that various modifications of the embodiments and details are possible without departing from the spirit and scope of the claims.

<1> According to a first aspect of the present disclosure,

provided is a polymer including a segment A and a segment B, wherein
the segment A has a glass transition temperature of 25°C or less, and contains 2,3,3,3-tetrafluoropropene unit and a fluorine-containing monomer unit (excluding 2,3,3,3-tetrafluoropropene unit and trifluoroethylene unit), and
the segment B has a melting point of 50°C or more.

<2> According to a second aspect of the present disclosure,
provided is the polymer according to the first aspect, containing a chain structure represented by a general formula (1) or a general formula (2):

General formula (1):     A-B-A

General formula (2):     B-A-B

wherein A represents the segment A, and B represents the segment B.

<3> According to a third aspect of the present disclosure,
provided is the polymer according to the first or second aspect, wherein the fluorine-containing monomer unit of the segment A is vinylidene fluoride unit.

<4> According to a fourth aspect of the present disclosure,
provided is the polymer according to any one of the first to the third aspects, wherein a content of 2,3,3,3-tetrafluoropropene unit in the segment A is 18 mol% or more based on all monomer units constituting the segment A.

<5> According to a fifth aspect of the present disclosure,
provided is the polymer according to any one of the first to the fourth aspects, wherein the segment B contains vinylidene fluoride unit, and a content of vinylidene fluoride unit in the segment B is 90 mol% or more based on all monomer units constituting the segment B.

<6> According to a sixth aspect of the present disclosure,
provided is the polymer according to any one of the first to the fifth aspects, wherein the segment B contains:

only vinylidene fluoride unit, or
vinylidene fluoride unit and at least one monomer unit selected from the group consisting of tetrafluoroethylene unit, hexafluoropropylene unit, 2,3,3,3-tetrafluoropropene unit, and (meth)acrylic acid unit.

<7> According to a seventh aspect of the present disclosure,
provided is the polymer according to any one of the first to sixth aspects, wherein a mass ratio of the segment A to the segment B is 40/60 to 95/5.

<8> According to a eighth aspect of the present disclosure,

provided is the polymer according to any one of the first to seventh aspects,
the polymer including a chain structure represented by a general formula (1) or a general formula (2):

General formula (1):     A-B-A

General formula (2):     B-A-B

wherein A represents the segment A, and B represents the segment B,
the segment A has a glass transition temperature of -10°C or less, and includes a 2,3,3,3-tetrafluoropropene unit and vinylidene fluoride unit, wherein a content of 2,3,3,3-tetrafluoropropene unit in the segment A is 18 to 30 mol% based on all monomer units constituting the segment A, and a content of vinylidene fluoride unit in the segment A is 70 to 82 mol% based on all monomer units constituting the segment A,
the segment B has a melting point of 140 to 200°C, and includes vinylidene fluoride unit, wherein a content of vinylidene fluoride unit in the segment B is 95 mol% or more based on all monomer units constituting the segment B,
a mass ratio of the segment A to the segment B (A/B) in the polymer is 50/50 to 90/10, and
a weight average molecular weight of the polymer is 500,000 to 2,000,000.

<9> According to a ninth aspect of the present disclosure,
provided is a polymer having a glass transition temperature and a melting point, containing a 2,3,3,3-tetrafluoropropene unit, and having an extraction in tetrahydrofuran at 25°C of 5% by mass or less (provided that a polymer containing trifluoroethylene unit is excluded).

<10> According to a tenth aspect of the present disclosure,
provided is the polymer according to the ninth aspect, including vinylidene fluoride unit.

<11> According to a eleventh aspect of the present disclosure,
provided is the polymer according to the ninth or tenth aspect, including two or more segments.

<12> According to an twelfth aspect of the present disclosure,

provided is the polymer according to any one of the ninth to eleventh aspects, wherein
a glass transition temperature is -10°C or less,

a melting point is 140 to 200°C,
including 2,3,3,3-tetrafluoropropene unit and a vinylidene fluoride unit, wherein a content of 2,3,3,3-tetrafluoropropene unit is 12 to 24 mol% based on all monomer units constituting the polymer, and a content of vinylidene fluoride unit is 76 to 88 mol% based on all monomer units constituting the polymer,
the extraction in tetrahydrofuran at 25°C is 2 to 4% by mass, and
a weight average molecular weight is 500,000 to 2,000,000.

<13> According to a thirteenth aspect of the present disclosure,
provided is a formed article containing the polymer according to any one of the first to the twelfth aspects.

EXAMPLES

Next, the embodiments of the present disclosure will be described with reference to Examples, but the present disclosure is not limited only to the Examples.

(Polymerization method)

Polymers were polymerized by the polymerization method according to each Synthetic Example below. The obtained polymers were evaluated according to the following evaluation criteria.

(Extraction in THF)

To 1 g of each polymer obtained in each Example, 9 g of tetrahydrofuran (THF) was added, and the mixture was stirred at 25°C with a stirrer. The solid was filtered after 24 hours, the solution was dried, and the weight of the dried product was measured to calculate the extraction.

(Solvent solubility)

To 1 g of each polymer obtained in each Example, 9 g of N-methyl-2-pyrrolidone (NMP) was added, and the mixture was stirred with a stirrer. After 24 hours, it was confirmed whether residues were not present, and each polymer was evaluated according to the following criteria.

Good: no residues were present
Poor: residues were present

(Alkaline resistance)

Each polymer obtained in each Example was compression molded to obtain a sheet-like formed article having a thickness of 2 mm. When the polymer has a melting point, compression molding was carried out at a temperature 20 to 40°C higher than the melting point of the polymer. When the polymer has no melting point, compression molding was carried out at 100°C. The formed article was immersed in 1% by volume of ammonia water at 90°C for 72 hours, and the weight was then measured. The weight change rate before and after immersion was calculated according to the following expression and evaluated according to the following criteria.

Weight change rate (%) = [(weight of formed article after immersion) - (weight of formed article before immersion)]/ (weight of formed article before immersion) $\times$ 100

Good: weight change rate was 10% or less
Poor: weight change rate was more than 10%

(Formulation analysis)

The polymer formulation was measured by a solution NMR method.

Measuring apparatus: VNMRS400 manufactured by Varian, Inc.
Resonance frequency: 376.04 (Sfrq)

Pulse width: 30°

(Weight average molecular weight(Mw))

The molecular weight was calculated in terms of standard polystyrene based on the results measured by the GPC method.

GPC apparatus: TOSOH HLC-8320GPC
Column: one SuperAW-H, three SuperAWM-H
Developing solvent: dimethylformamide [DMF]
Sample concentration: 0.05% by mass
Measurement temperature: 40°C

(Glass transition temperature)

Using a differential scanning calorimeter X-DSC7000 (manufactured by Hitachi High-Tech Science Corporation), the temperature of 10 mg of a sample was raised at 20°C/min to obtain a DSC curve, and the temperature indicating an intersection point of the extensions of the base lines before and after the secondary transition of the DSC curve and the tangent line at an inflection point of the DSC curve was defined as the glass transition temperature.

(Melting point)

10 mg of a sample was heated at 10°C/min using a differential scanning calorimeter X-DSC7000 (manufactured by Hitachi Techno Science Corporation) to thereby obtain a DSC curve, the temperature corresponding to the peak of the obtained endothermic curve was specified as the melting point, and the heat of fusion was calculated from the magnitude of the melting peak ($\Delta$H) of the obtained endothermic curve.

Example 1

(Production of a B-A-B block polymer, wherein A represents a segment A and B represents a segment B.)

(Step 1)

4,000 ml of pure water, 0.8001 g of a 50% aqueous solution of $CH_2=CFCF_2OCF(CF_3)CF_2OCF(CF_3)COONH_4$, and 24.021 g of a 50% aqueous solution of $C_5F_{11}COONH_4$ were placed in a 6 L stainless steel autoclave, the autoclave was purged with nitrogen and slightly pressurized with VdF, the temperature thereof was adjusted to 80°C while stirring at 400 rpm, VdF was injected under pressure to 1.64 MPa, and further a mixed solution monomer of VdF and 2,3,3,3-tetrafluoropropene (R1234yf) at a molar ratio of 77.2/22.8 was injected under pressure to 2.001 MPa. 0.16 g of ammonium persulfate dissolved in 4 ml of pure water was injected under nitrogen pressure to start polymerization. When 24 g of the mixed solution monomer was reached, 1.009 g of 1,4-diiodoperfluorobutane was added. When the pressure dropped to 1.98 MPa, the pressure was increased to 2.01 MPa with the mixed solution monomer. This operation was repeated, and when 1,020 g of the mixed solution monomer was fed, the autoclave was vented to 0.05 MPa, and then the dispersion was subjected to heat treatment for 3 hours. 10 g of the dispersion in the autoclave was sampled and dried to obtain a polymer. The polymer had a formulation of VdF/R1234yf = 77.6/22.4 in a molar ratio, had a glass transition temperature of -12.5°C, and had no heat of fusion.

(Step 2)

After the heat treatment in step 1, VdF was injected under pressure to 2.003 MPa while maintaining the temperature in the autoclave at 80°C, 0.08 g of ammonium persulfate dissolved in 4 ml of pure water was injected under nitrogen pressure to start polymerization. When the pressure dropped to 1.98 MPa, the pressure was increased to 2.01 MPa with VdF. This operation was repeated, and when 180 g of VdF was fed, the autoclave was vented and cooled to recover 5,270 g of a dispersion. The solid content of the dispersion was 23.83wt%.

Aluminum sulfate was added to this dispersion to cause coagulation, and the resulting coagulated product was dried to obtain 1,250 g of a polymer. The obtained block polymer had a formulation of VdF/R1234yf = 82.0/18.0 in a molar ratio, and had a content of the segment B determined from the formulation of 17.2wt%. The weight average molecular weight Mw thereof was 1,266,000, the glass transition temperature was -12.9°C, the melting point was 160.3°C, and the heat of fusion was 8.2 mJ/mg.

Example 2

(Production of a B-A-B block polymer, wherein A represents a segment A and B represents a segment B.)

5,236 g of a dispersion was recovered in the same manner as in Example 1, except that the amount of the mixed solution monomer fed in step 1 was changed from 1,020 g to 900 g and the amount of VdF fed in step 2 was changed from 180 g to 300 g. The solid content of the dispersion was 10wt%.

Aluminum sulfate was added to this dispersion to cause coagulation, and the resulting coagulated product was dried to obtain 1,257 g of a polymer. The obtained block polymer had a formulation of VdF/R1234yf = 84.2/15.8 in a molar ratio, and had a content of the segment B determined from the formulation of 28.1wt%. The weight average molecular weight Mw thereof was 1,206,000, the glass transition temperature was -11.0°C, the melting point was 161.1°C, and the heat of fusion was 11.0 mJ/mg.

Example 3

(Production of a B-A-B block polymer, wherein A represents a segment A and B represents a segment B.)

5,252 g of a dispersion was recovered in the same manner as in Example 1, except that the amount of the mixed solution monomer fed in step 1 was changed from 1,020 g to 780 g and the amount of VdF fed in step 2 was changed from 180 g to 420 g. The solid content of the dispersion was 23.74 wt%.

Aluminum sulfate was added to this dispersion to cause coagulation, and the resulting coagulated product was dried to obtain 1,250 g of a polymer. The obtained block polymer had a formulation of VdF/R1234yf = 85.9/14.1 in a molar ratio, and had a content of the segment B determined from the formulation of 36.0wt%. The weight average molecular weight Mw thereof was 1,161,400, the glass transition temperature was -11.2°C, the melting point was 161.4°C, and the heat of fusion was 17.1 mJ/mg.

Example 4

(Production of an A-B-A block polymer, wherein A represents a segment A and B represents a segment B.)

(Step 1)

4,000 ml of pure water, 0.8003 g of a 50% aqueous solution of $CH_2=CFCF_2OCF(CF_3)CF_2OCF(CF_3)COONH_4$, and 24.014 g of a 50% aqueous solution of $C_5F_{11}COONH_4$ were placed in a 6 L stainless steel autoclave, the autoclave was purged with nitrogen and slightly pressurized with VdF, the temperature thereof was adjusted to 80°C while stirring at 400 rpm, and VdF was injected under pressure to 2.00 MPa. 0.16 g of ammonium persulfate dissolved in 4 ml of pure water was injected under nitrogen pressure to start polymerization. When 24 g of VdF was reached, 1.009 g of 1,4-diiodoperfluorobutane was added. When the pressure dropped to 1.98 MPa, the pressure was increased to 2.01 MPa with VdF. This operation was repeated, and when 300 g of VdF was fed, the autoclave was vented to 0.05 MPa, and then the dispersion was subjected to heat treatment for 3 hours. 10 g of the dispersion in the autoclave was sampled and dried to obtain a polymer. The glass transition temperature thereof was not observed, the melting point was 161.1°C, and the heat of fusion was 44.8 mJ/mg.

(Step 2)

After the heat treatment in step 1, VdF was injected under pressure to 1.64 MPa and a mixed solution monomer of VdF and R1234yf at a molar ratio of 77.5/22.5 was injected under pressure to 2.001 MPa while maintaining the temperature in the autoclave at 80°C, and 0.08 g of ammonium persulfate dissolved in 4 ml of pure water was injected under nitrogen pressure to start polymerization. When the pressure dropped to 1.98 MPa, the pressure was increased to 2.01 MPa with the mixed solution monomer. This operation was repeated, and when 900 g of the mixed solution monomer was fed, the autoclave was vented and cooled to recover 5,271 g of a dispersion. The solid content of the dispersion was 23.80wt%.

Aluminum sulfate was added to this dispersion to cause coagulation, and the resulting coagulated product was dried to obtain 1,248 g of a polymer. The obtained block polymer had a formulation of VdF/R1234yf = 82.7/17.3 in a molar ratio, and had a content of the segment B determined from the formulation of 24.1wt%. The weight average molecular weight Mw thereof was 1,426,000, the glass transition temperature was -10.4°C, the melting point was 160.8°C, and the heat of fusion was 10.8 mJ/mg.

Comparative Example 1

(Production of a B-A-B block polymer, wherein A represents a segment A and B represents a segment B.)

(Step 1)

4,000 ml of pure water, 0.8001 g of a 50% aqueous solution of $CH_2=CFCF_2OCF(CF_3)CF_2OCF(CF_3)COONH_4$, and 24.021 g of a 50% aqueous solution of $C_5F_{11}COONH_4$ were placed in a 6 L stainless steel autoclave, the autoclave was purged with nitrogen and slightly pressurized with hexafluoropropene (HFP), the temperature thereof was adjusted to 80°C while stirring at 400 rpm, HFP was injected under pressure to 0.68 MPa, and further a mixed solution monomer of VdF and HFP at a molar ratio of 78.3/21.7 was injected under pressure to 2.001 MPa. 0.16 g of ammonium persulfate dissolved in 4 ml of pure water was injected under nitrogen pressure to start polymerization. When 24 g of the mixed solution monomer was reached, 1.003 g of 1,4-diiodoperfluorobutane was added. When the pressure dropped to 1.98 MPa, the pressure was increased to 2.01 MPa with the mixed solution monomer. This operation was repeated, and when 1,020 g of the mixed solution monomer was fed, the autoclave was vented to 0.05 MPa, and then the dispersion was subjected to heat treatment for 3 hours. 10 g of the dispersion in the autoclave was sampled and dried to obtain a polymer. The polymer had a formulation of VdF/HFP = 78.6/21.4 in a molar ratio.

(Step 2)

After the heat treatment in step 1, VdF was injected under pressure to 2.003 MPa while maintaining the temperature in the autoclave at 80°C, 0.08 g of ammonium persulfate dissolved in 4 ml of pure water was injected under nitrogen pressure to start polymerization. When the pressure dropped to 1.98 MPa, the pressure was increased to 2.01 MPa with VdF. This operation was repeated, and when 180 g of VdF was fed, the autoclave was vented and cooled to recover 5,275 g of a dispersion. The solid content of the dispersion was 23.81 wt%.

Aluminum sulfate was added to this dispersion to cause coagulation, and the resulting coagulated product was dried to obtain 1,245 g of a polymer. The obtained block polymer had a formulation of VdF/HFP = 82.5/17.5 in a molar ratio, and had a content of the segment B determined from the formulation of 14.8 wt%. The weight average molecular weight Mw thereof was 1,150,000, the glass transition temperature was -18.7°C, the melting point was 160.1°C, and the heat of fusion was 8.0 mJ/mg.

Comparative Example 2

A fluoroelastomer in which VdF/R1234yf was 78.6/21.4 in a molar ratio was obtained according to the production method described in Example 12 in Japanese Patent Laid-Open No. 2013-216915.

For Examples 1 to 4 and Comparative Examples 1 to 2, the results of the alkaline resistance, solvent solubility, and THF extraction tests were summarized in Table 1.

[Table 1]

Table 1

|  | Monomers constituting segment A | Monomers constituting segment B | Alkaline resistance | Solvent solubility | Extraction in THF |
|---|---|---|---|---|---|
| Example 1 | VdF/R1234yf | VdF | Good | Good | 3% |
| Example 2 | VdF/R1234yf | VdF | Good | Good | 3% |
| Example 3 | VdF/R1234yf | VdF | Good | Good | 3% |
| Example 4 | VdF/R1234yf | VdF | Good | Good | 3% |
| Comparative Example 1 | VdF/HFP | VdF | Poor | Good | 3% |
| Comparative Example 2 | VdF/R1234yf | - | Good | Good | 100% |

**Claims**

1. A polymer comprising a segment A and a segment B, wherein

   the segment A has a glass transition temperature of 25°C or less, and comprises 2,3,3,3-tetrafluoropropene unit and a fluorine-containing monomer unit excluding 2,3,3,3-tetrafluoropropene unit and trifluoroethylene unit, and the segment B has a melting point of 50°C or more.

2. The polymer according to claim 1, comprising a chain structure represented by a general formula (1) or a general formula (2):

   General formula (1):        A-B-A

   General formula (2):        B-A-B

   wherein A represents the segment A, and B represents the segment B.

3. The polymer according to claim 1 or 2, wherein the fluorine-containing monomer unit of the segment A is vinylidene fluoride unit.

4. The polymer according to any one of claims 1 to 3, wherein a content of 2,3,3,3-tetrafluoropropene unit in the segment A is 18 mol% or more based on all monomer units constituting the segment A.

5. The polymer according to any one of claims 1 to 4, wherein the segment B comprises vinylidene fluoride unit, and a content of vinylidene fluoride unit in the segment B is 90 mol% or more based on all monomer units constituting the segment B.

6. The polymer according to any one of claims 1 to 5, wherein the segment B comprises

   only vinylidene fluoride unit, or
   vinylidene fluoride unit and at least one monomer unit selected from the group consisting of tetrafluoroethylene unit, hexafluoropropylene unit, 2,3,3,3-tetrafluoropropene unit, and (meth)acrylic acid unit.

7. The polymer according to any one of claims 1 to 6, wherein a mass ratio of the segment A to the segment B is 40/60 to 95/5.

8. The polymer according to any one of claims 1 to 7, wherein

   the polymer has a chain structure represented by the general formula (1) or the general formula (2):

   General formula (1):        A-B-A

   General formula (2):        B-A-B

   wherein A represents the segment A, and B represents the segment B,
   the segment A has a glass transition temperature of -10°C or less, and comprises 2,3,3,3-tetrafluoropropene unit and vinylidene fluoride unit, wherein a content of 2,3,3,3-tetrafluoropropene unit in the segment A is 18 to 30 mol% based on all monomer units constituting the segment A, and a content of vinylidene fluoride unit in the segment A is 70 to 82 mol% based on all monomer units constituting the segment A,
   the segment B has a melting point of 140 to 200°C, and comprises vinylidene fluoride unit, wherein a content of vinylidene fluoride unit in the segment B is 95 mol% or more based on all monomer units constituting the segment B,
   a mass ratio of the segment A to the segment B, (A/B), in the polymer is 50/50 to 90/10, and
   a weight average molecular weight of the polymer is 500,000 to 2,000,000.

9. A polymer having a glass transition temperature and a melting point, comprising 2,3,3,3-tetrafluoropropene unit, and having an extraction in tetrahydrofuran at 25°C of 5% by mass or less, provided that a polymer comprising trifluoroethylene unit is excluded.

**10.** The polymer according to claim 9, further comprising vinylidene fluoride unit.

**11.** The polymer according to claim 9 or 10, comprising two or more segments.

**12.** The polymer according to any one of claims 9 to 11, wherein

a glass transition temperature is -10°C or less,
a melting point is 140 to 200°C,
the polymer comprises 2,3,3,3-tetrafluoropropene unit and vinylidene fluoride unit, wherein a content of 2,3,3,3-tetrafluoropropene unit is 12 to 24 mol% based on all monomer units constituting the polymer, and a content of vinylidene fluoride unit is 76 to 88 mol% based on all monomer units constituting the polymer,
an extraction in tetrahydrofuran at 25°C is 2 to 4% by mass, and
a weight average molecular weight is 500,000 to 2,000,000.

**13.** A formed article comprising the polymer according to any one of claims 1 to 12.

## INTERNATIONAL SEARCH REPORT

International application No.

**PCT/JP2024/032116**

### A. CLASSIFICATION OF SUBJECT MATTER

*C08F 293/00*(2006.01)i
FI: C08F293/00

According to International Patent Classification (IPC) or to both national classification and IPC

### B. FIELDS SEARCHED

Minimum documentation searched (classification system followed by classification symbols)

C08F293/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CApius／REGISTRY(STN), JSTpius／JST7580(JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2015-514854 A (ARKEMA FRANCE) 21 May 2015 (2015-05-21) claims, paragraph [0043], examples | 1, 3-7, 13 |
| A | entire text | 2, 8-12 |
| X | JP 2018-530662 A (ARKEMA FRANCE) 18 October 2018 (2018-10-18) claims, paragraph [0013], examples | 9-11, 13 |
| A | entire text | 1-8, 12 |
| A | JP 2022-36069 A (DAIKIN INDUSTRIES, LTD.) 04 March 2022 (2022-03-04) entire text | 1-13 |
| A | WO 2008/079879 A1 (HONEYWELL INTERNATIONAL INC.) 03 July 2008 (2008-07-03) entire text | 1-13 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 October 2024** | **05 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/032116**

**Box No. III     Observations where unity of invention is lacking (Continuation of item 3 of first sheet)**

This International Searching Authority found multiple inventions in this international application, as follows:

Document 1: JP 2015-514854 A (ARKEMA FRANCE) 21 May 2015 (2015-05-21), examples
& US 2015/0119523 A1, examples
& EP 2841474 A1
& FR 2989972 A1
& KR 10-2015-0006865 A
& CN 104540861 A

The claims are classified into the following two inventions.

(Invention 1) Claims 1-8 and 13
    Example 1 of document 1 comprises a polymer containing VDF homopolymer blocks (since melting point is inferred to be at least 50°C, same corresponds to "segment B" of the present application) and tercopolymer blocks containing 2,3,3,3-tetrafluoropropene units (since glass transition temperature is inferred to be 25°C or less, same corresponds to "segment A" of the present application). This being the case, the invention in claim 1 of the present application cannot be said to have a special technical feature in light of document 1.
    Next, in the invention in claim 2 of the present application, the special technical feature of "containing a chain structure represented by general formula (1) or general formula (2)" was found.
    Accordingly, the invention in claims 1-2 of the present application for which the presence or absence of a special technical feature was previously examined, the invention in claims 3-8 having the same or corresponding special technical feature as the aforementioned special technical feature, and the invention in claim 13 depending from claims 1-8 are classified as invention 1.

(Invention 2) Claims 9-13
    The invention in claims 9-12 of the present application does not have the aforementioned special technical feature. Moreover, there are no other same or corresponding special technical features between claims 9-12 and claim 1 classified as invention 1. Furthermore, the invention in claims 9-12 is not substantially identical to or similarly closely related to any of the claims classified as invention 1.
    Thus, the invention in claims 9-12 and the invention in claim 13 depending from claims 9-12 are classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/032116**

| Patent document cited in search report | | | Publication date (day/month/year) | Patent family member(s) | | | Publication date (day/month/year) |
|---|---|---|---|---|---|---|---|
| JP | 2015-514854 | A | 21 May 2015 | US | 2015/0119523 | A1 | |
| | | | | claims, paragraph [0051], examples | | | |
| | | | | EP | 2841474 | A1 | |
| | | | | FR | 2989972 | A1 | |
| | | | | KR | 10-2015-0006865 | A | |
| | | | | CN | 104540861 | A | |
| JP | 2018-530662 | A | 18 October 2018 | US | 2018/0305483 | A1 | |
| | | | | claims, paragraph [0011], examples | | | |
| | | | | EP | 3365377 | A1 | |
| | | | | FR | 3042502 | A1 | |
| | | | | CN | 108137724 | A | |
| | | | | KR | 10-2018-0068991 | A | |
| JP | 2022-36069 | A | 04 March 2022 | US | 2023/0197967 | A1 | |
| | | | | entire text | | | |
| | | | | EP | 4201971 | A1 | |
| | | | | TW | 202213844 | A | |
| | | | | KR | 10-2023-0038563 | A | |
| | | | | CN | 116157431 | A | |
| WO | 2008/079879 | A1 | 03 July 2008 | US | 2008/0153977 | A1 | |
| | | | | entire text | | | |

Form PCT/ISA/210 (patent family annex) (July 2022)

**EP 4 768 513 A1**

**Patent documents cited in the description**

- JP 53003495 A
- JP 61049327 A
- JP 2014070206 A
- JP 2015514854 W
- JP 2013216915 A